# EUROPEAN PATENT APPLICATION

(11) **EP 4 249 746 A1**
(43) Date of publication of application: **27.09.2023**
(21) Application number: 22164586.4
(22) Date of filing: 25.03.2022
(51) Int. Cl.: F02K 1/82, B64C 29/00, B64C 39/00, B64D 27/24, F02K 5/00

(54) **ELECTRICALLY DRIVEN DUCTED FAN ENGINE**

(71) Applicant: Lilium eAircraft GmbH, 82234 Wessling (DE)
(72) Inventor: SINGH, Deepesh Kumar, 82205 Gilching (DE); FAROOQUI, Maaz, 82296 Schöngiesing (DE); VERMEIREN, Sébastien, 80991 München (DE)
(74) Representative: Weickmann & Weickmann PartmbB

(57) **Abstract**

The present invention relates to an electrically driven ducted fan engine (10), comprising a housing (12) with an inner housing wall (12a), defining a substantially cylindrical inner space (14) and a longitudinal axis (L), an inlet opening (16) provided in the housing (12), a rotor (20) with a multitude of rotor blades (20a), which is arranged to be driven in rotation by means of an electrical motor (22) and positioned in the inner space (14) of the housing (12) downstream of the inlet opening (16) with respect to the longitudinal axis (L) of the engine (10), a stator assembly (24) with a multitude of guide vanes (24a) extending from a radially central region of the inner space (14) to the inner wall (12a) of the housing (12), which is fixedly arranged in the inner space (14) of the housing (12) downstream of the rotor (20) with respect to the longitudinal axis (L) of the engine (10), and an exhaust opening (26) provided in the housing (12) downstream of the stator assembly (24) with respect to the longitudinal axis (L) of the engine (10), wherein with respect to the longitudinal axis (L) of the engine (10), an interstage region (30) is defined between the rotor (20) and the stator assembly (24), a guide vane region (32) is defined in the longitudinal section in which the guide vanes (24a) extend to the inner wall (12a) of the housing (12) and an exhaust section (34) is defined between the stator assembly (24) and the exhaust opening (26), wherein in at least one of the interstage region (30), the guide vane region (32) and the exhaust region (34), acoustic liners are provided to the housing (12).

## Description

The present invention relates to an electrically driven ducted fan engine, comprising a housing with an inner housing wall, defining a substantially cylindrical inner space and a longitudinal axis, an inlet opening provided in the housing, a rotor with a multitude of rotor blades, which is arranged to be driven in rotation by means of an electrical motor and positioned in the inner space of the housing downstream of the inlet opening with respect to the longitudinal axis of the engine, a stator assembly with a multitude of guide vanes extending from a radially central region of the inner space to the inner wall of the housing, which is fixedly arranged in the inner space of the housing downstream of the rotor with respect to the longitudinal axis of the engine, and an exhaust opening provided in the housing downstream of the stator assembly with respect to the longitudinal axis of the engine.

When designing an electrically driven ducted fan engine, it has to be decided on the best possible reduction of operating noise emitted by the engine in order to minimize the ground radiations caused by operation of the aircraft provided with the respective engine. For example, the current noise regulations limit the total number of flights that an aircraft can make through a given airport by restricting the integrated noise emissions in the given time of operation. More silent aircraft hence have the benefits of being able to perform more flight operations and thus generate more revenue. Since noise emission is logarithmic in nature, an aircraft with 3 dB less noise emitted compared to a baseline aircraft can make twice as many flights compared to the latter, while a 10 dB reduction of noise would allow for ten times as many flights and a 20 dB reduction to even 100 times more flights. It is thus obvious that the potential economic advantages of reducing noise emitted by such engines can be substantial, while of course the overall acceptance of such aircraft by people living near airports or hubs can also be vital in establishing respective services.

However, providing such electrically driven ducted fan engines with a large amount of acoustic lining comes at the penalty of aerodynamic drag and increased mass due to the increase in diameter and material, both of which limit the range and efficiency of the aircraft, while there may also arise icing and heating issues in the engine. Thus, finding an optimal compromise between best possible noise reduction and the above-mentioned disadvantageous effects is a challenging task.

In conventional aircraft with jet engines, most emphasis is put on providing acoustic lining at their respective intakes in order to reduce the dominant sources of noise in the form of fan buzz saw noise, which arises when the tips of the early compressor stages exceed velocities of Mach 1. However, since in electrically driven ducted fan engines, the rotor can be driven at very high frequencies while still keeping the tip speed of the rotor sub-sonic due to the usually smaller diameters of such engines, other sources of noise become dominant or at least equally important as fan noise. Furthermore, the thermal profiles of jet engines and electrically driven engines are substantially different, such that also for these reasons, strategies for noise reduction of jet engines might not be optimal choices for electrically driven ducted fan engines.

Also, in case of combining electrical propulsion with vertical take-off and landing capabilities in aircraft which may in particular comprise tiltable engines, due to the directivity of the engines in their starting and landing phases, which intrinsically directs more noise to the ground, special emphasis has to be put on noise reduction downstream of the engine as compared to conventional aircraft in which the orientation of the engines basically remains horizontal at all times.

Another aspect that has to be taken into account is that in particular in distributed propulsion systems with a plurality of electrically driven ducted fan engines in a single aircraft, the fans are driven at higher RPM in a small diameter duct, which causes higher order modes of noise to appear in the noise pressure field from aerodynamic as well as other mechanical parts.

It is therefore an object of the present invention to provide an electrically driven ducted fan engine of the above-mentioned type, in which an optimal compromise is found between noise reduction and the avoidance of disadvantageous effects of employing a large amount of acoustic lining, such as additional aerodynamic drag and increased weight.

For this purpose and in order to solve the above-identified problem, in the electrically driven ducted fan engine according to the present invention, with respect to the longitudinal axis of the engine, an interstage region is defined between the rotor and the stator assembly, a guide vane region is defined in the longitudinal section in which the guide vanes extend to the inner wall of the housing, and an exhaust section is defined between the stator assembly and the exhaust opening, wherein in at least one of the interstage region, the guide vane region and the exhaust region, acoustic liners are provided to the housing. Thus, by restricting the acoustic liners to at least one of the interstage region, the guide vane region and the exhaust region, care is taken that with the particular noise emission properties of such electrically driven ducted fan engines, the lining is provided at the relevant regions of the engine while regions less important for noise reduction can be made devoid of acoustic liner.

In particular, all of the interstage region, the guide vane region and the exhaust region may be provided with acoustic liner to the housing, and/or the longitudinal section of the housing upstream of the rotor can be devoid of acoustic liner.

Furthermore, the acoustic liner may be tuned to at least one wavelength, λ, or frequency of noise, which is preferably calculated depending on at least one of the number of rotor blades, the number of guide vanes and a number of poles of the electric motor driving the rotor.

In an aircraft powered by electrically driven rotor propulsion systems, said systems tend to radiate noise at shaft passing frequency, i.e. RPM divided by 60, multiplied by the number of rotating components causing the tone noise source. These tones dominate the spectrum, followed by broadband noise that occurs at all frequencies or at least over a certain range of the frequency spectrum.

The aerodynamic tones are caused by the periodic interaction of the incoming turbulence with the fan leading edge, commonly referred to as rotor tones, as well as the interaction of the fan wakes with the downstream stator assembly, commonly referred to as interaction tones. Thus, the aerodynamic tones occur at frequencies in the frequency spectrum which are correlated to the number of rotor blades and its multiples, B, 2B, 3B... with B being the number of rotor blades. Apart from said tones at well-defined frequencies or wavelengths, these two mechanisms also cause broadband noise over the whole frequency spectrum.

Similarly, motor tones occur due to periodic fluctuation of rotating poles against the stator in the electric motor causing noise at frequencies correlated to multiples of the number of electric poles P, 2P, 3P..., with P being the number of electric motor poles. Furthermore, the shaft eccentricity and rotor dynamic imbalance may create tones at further integral values. These tones are referred to as mechanical noise and propagate both upstream and downstream from their sources. However, for the above-mentioned reason and also due to the fact that in commonly employed aircraft designs, upstream radiation of noise is masked by wings or canards, and thus its radiation to the ground is rather blocked, the interstage region, the guide vane region and the exhaust region have been shown to be ideal locations for the provision of acoustic liner to the housing of the engine in order to mainly reduce downstream noise emissions.

In particular, in the interstage region, the acoustic liners are useful to mitigate a part of the fan noise that radiates downstream, and said location should be given priority if a lower number of rotor blades is chosen, for example, less than 12, since the fan noise increases as the number of rotor blades goes down. Both in the interstage region and guide vane region, interaction tones as well as mechanical tones propagating downstream may be attenuated, which in practice are the most important noise sources with respect to silence on the ground.

However, acoustic liner provided in the exhaust section also contributes to reducing interaction noise as well as mechanical tones propagating downstream.

In some embodiments of the electrically driven ducted fan engine according to the present invention, the acoustic liner may comprise porous liner material, wherein preferably the porous liner material may be tuned with respect to its porosity, cavity thickness, flow resistivity and/or tortuosity. One example for such porous liner material can be chosen such that the porosity of the porous liner material is in the range of 80 to 99 % and/or its cavity thickness is approximately λ/4. A concrete example of the material properties of one particularly suitable porous liner material is given in the following table 1:

**Table 1**

| Property | Value |
|---|---|
| Porosity | 0.9233 |
| Flow Resistivity | 1.4405e+04 |
| Tortuosity | 1.455 |
| Visc. Lengths | 6.5e-5 |
| Thermal Lengths | 1.3e-4 |
| Density (physical) | 30 kg/m³ |
| Cover plate thickness, hole diameter | 1 mm, 2 mm |
| Cover plate porosity | 15% |

Alternatively or additionally, the acoustic liner may comprise Helmholtz liners, wherein preferably the Helmholtz liners are tuned with respect to their thickness, their porosity, blade thickness, hole diameter and/or cavity depth. Helmholtz liner material consists of a cavity structure with many cavities, such as in a honeycomb configuration, covered by a perforated face sheet. Herein, the air within the cavities represent a dampening medium, while the mass of air within the small holes of the perforated face sheet is oscillating due to acoustic excitation. Sound energy is thus absorbed by friction losses within the holes, compression and expansion of the cavity volume as well as shedding of vorticity from the edges of the hole.

In particular embodiments, the hole diameter may be in the range of 0.5 to 5 mm, the cavity thickness may be in the range of λ/20 to λ/4, wherein λ is the wavelength of the acoustic wave impinging on the acoustic liner, and/or the porosity may be in the range of 2 to 10 %. Some concrete examples of Helmholtz liner material with beneficial properties are listed in the following table 2:

**Table 2**

| Thickness Range | Porosity (%) | Plate thickness (mm) | Hole diameter (mm) | Cavity depth (mm) |
|---|---|---|---|---|
| > 41 mm | 5 | 0.5 | 0.25 | 42 |
| 35 mm - 41 mm | 10 | 0.5 | 0.25 | 36 |
| 25 mm - 35 mm | 10 | 0.5 | 0.25 | 28.5 |
| 20 mm - 25 mm | 11.5 | 0.5 | 0.25 | 23.5 |
| 15 mm - 20 mm | 11.5 | 0.5 | 0.4 | 18 |
| 10 mm - 15 mm | 13 | 0.5 | 0.4 | 15 |
| < 10 mm | 4.5 | 0.5 | 0.25 | 10 |

Irrespective of the type of acoustic liner that is chosen in a specific embodiment, it is observed that its noise reduction efficiency is excellent at all other shaft harmonics if it is tuned to one of the tones. Therein, the tone to be selected may be calculated from first principles, simulated or measured in experiments on the actual type of electrically driven ducted fan engine, which is to be provided with the respective acoustic liners.

The improved efficiency at shaft harmonics is due to the tones being propagated in spinning modes that are higher in azimuthal number depending upon their source and hence the tones are always dissipated better than broadband noise by any liner material. Thus, by tuning the impedance of the liner to the most prevalent tone either through calculation, simulation or experimentation, the benefit of improved dampening of other shaft harmonics can be achieved.

In particular, the electrically driven ducted fan engine according to the present invention may have a diameter of 28 to 38 cm, which corresponds to the dimensions of engines currently foreseen for electrically propelled vertical take-off and landing aircraft with a large number of tiltable engines.

In particular, the present invention also relates to such an aircraft with a fuselage and at least one pair of wings, which is further provided with at least one electrically driven ducted fan engine as described above, wherein in particular the ducted fan engine is pivotably mounted to one of the wings, for example by means of tiltable flaps.

In one concrete example of such a configuration. the acoustic liner may be manufactured using aviation grade AMS complying composite materials. For example, each liner may be fabricated by attaching a perforated inner facesheet and an outer skin to a core bonded together by an adhesive film. Furthermore, certain sections of the liners may be fabricated in one piece, in particular for the interstage and exhaust regions, while other sections of the liners may be fabricated in four quadrants, in particular for the guide vane region.

The manufacturing process of the liners may start by pre-forming a core of maximum possible depth, which may in particular be a lightweight honeycomb structured component sandwiched between two sheets to provide stiffness and noise reduction. Therein, the core ribbon direction may be 45° to a horizontal axis. The composite inner facesheet may then be molded as per given air wash surface characteristics, for example its surface may be selected as a tool surface with a surface roughness requirement of Ra 1.6.

Holes may then be drilled into the inner facesheet using a multi-drill. The outer surface of the assembly may be CNC machined as per space constraints and later installed inside the engine, wherein the outer part of the core may be sealed with a flap outer structure using adhesives, such that the outer skin becomes part of the flap outer structure. Any axial step or discontinuity among the liners may be sealed as well using adhesives.

Further features and advantages of the present invention will become even clearer from the following description of an embodiment thereof, when taken together with the accompanying drawings. These drawings in particular show:
- Fig. 1: a cross-sectional view of an electrically driven ducted fan engine according to the present invention;
- Fig. 2: a schematic cross-sectional view of the engine of Fig. 1 with its housing removed; and
- Fig. 3: a schematic top view of an aircraft provided with a plurality of engines as shown in Fig. 1 and 2.

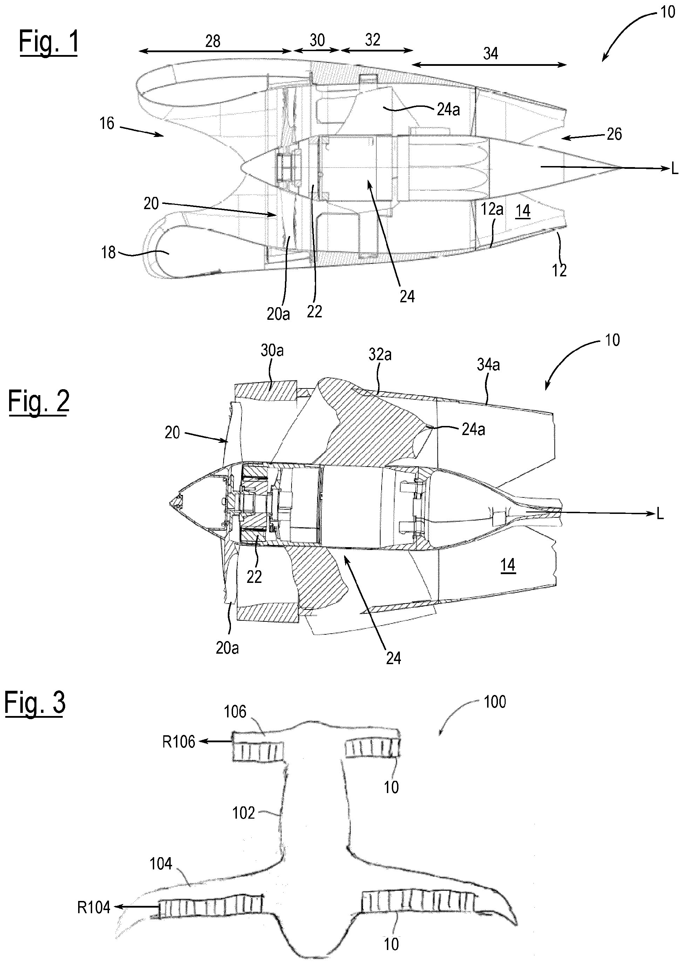

In Fig. 1, an electrically driven ducted fan engine is shown in cross-sectional view and generally denoted by reference numeral 10. Said engine comprises a housing 12 with an inner housing wall 12a defining a substantially cylindrical inner space 14 and a longitudinal axis L. It is obvious from Fig. 1 that the substantially cylindrical inner shape may also encompass regions, in which it is at least slightly conical such as towards its outlet.

On the upstream end of the engine 10 with respect to the longitudinal axis L, an inlet opening 16 is provided in the housing 12 through which air can be taken in which will subsequently be compressed and ejected for providing thrust for the propulsion of the aircraft to which the engine 10 is mounted. For an overview of such an aircraft, it is referred to Fig. 3, which will be discussed below.

In order to install the engine 10 on a wing or canard of the aircraft 100 of Fig. 3, a connection section 18 is provided in the front part of the engine housing 12, which may allow for a tilting of the engine 10 with respect to the wing or canard around an axis which substantially extends along the longitudinal direction of the respective wing 104 or canard 106, such that the aircraft is capable of vertical take-off and landing by means of respective tilting strategies of its engines.

Inside the inner space 14 of the housing 12, a rotor 20 with a multitude of rotor blades 20a is provided, which is arranged to be driven in rotation by means of an electric motor 22 with a stator and a plurality of rotating poles. Further downstream of the rotor 20, a stator assembly 24 with a multitude of guide vanes 24a is provided, wherein the guide vanes 24a extend from a radially central region of the inner space 14 to the inner wall 12a of the housing. Said static guide vanes serve the purpose of directing the transverse impulse in the driven air stream of the rotor 20 in a suitable manner substantially in the longitudinal direction L and avoiding the formation of cross-flows. Thus, the guide vanes 24A effectively act as baffle plates.

Even further downstream of the stator assembly 24, an exhaust opening 26 is provided in the housing 12 through which the air compressed by the rotor 12 will finally exit the engine 10 and provide thrust to the aircraft along the longitudinal axis L of the engine 10.

Taking into account the above-described components of the engine 10, with respect to the longitudinal axis L of the engine 10, several regions can be defined, namely an inlet section 28 upstream of the rotor 20, an interstage region 30 between the rotor 20 and the stator assembly 24, a guide vane region 32 in which the guide vanes 24a extend to the inner wall 12a and finally an exhaust section 34 between the stator assembly 24 and the exhaust opening 26 of the engine 10.

In order to reduce the emission of operating noise of the engine 10, according to the present invention, acoustic liner is provided to the housing in at least one of the interstage region 30, the guide vane region 32 and the exhaust region 34 as can be seen in particular in Fig. 2, in which for better visibility the housing 10 has been removed.

In said Fig. 2, the respective acoustic liners are denoted with 30a, 32a and 34a referring to the liners provided in the interstage region 30, the guide vane region 32 and the exhaust region 34, respectively. Said acoustic liners 30a to 34a may comprise a porous liner material and/or Helmholtz liners which can be tuned according to the acoustic properties of the engine 10 in its operation and a substantial reduction of noise emitted can be achieved, in particular with respect to the ground, especially when taking into account the tiltable connection of the engine 10 to the corresponding wing 104 or canard 106 of the aircraft 100 as discussed below.

Said aircraft 100 is shown in Fig. 3 in a schematic manner and it comprises a fuselage 102, a pair of wings 104 and a pair of canards 106 positioned in front of the wings 106 with respect to the main flying direction of the aircraft 100. To each of the wings 104 and canards 106, a plurality of engines 10 as shown in Fig. 1 and 2 are mounted in a tiltable manner by means of their respective connection sections 18, such that the engines are tiltable with respect to axes with substantially extend along the longitudinal directions L104 and L106 of the wings 104 and canards 106, respectively. By employing suitable strategies for tilting the engines 10 with respect to their respective wing 104 or canard 106, the aircraft is capable of vertical take-off and landing.

## Claims

1. Electrically driven ducted fan engine (10), comprising:
- a housing (12) with an inner housing wall (12a), defining a substantially cylindrical inner space (14) and a longitudinal axis (L);
- an inlet opening (16) provided in the housing (12);
- a rotor (20) with a multitude of rotor blades (20a), which is arranged to be driven in rotation by means of an electrical motor (22) and positioned in the inner space (14) of the housing (12) downstream of the inlet opening (16) with respect to the longitudinal axis (L) of the engine (10);
- a stator assembly (24) with a multitude of guide vanes (24a) extending from a radially central region of the inner space (14) to the inner wall (12a) of the housing (12), which is fixedly arranged in the inner space (14) of the housing (12) downstream of the rotor (20) with respect to the longitudinal axis (L) of the engine (10); and
- an exhaust opening (26) provided in the housing (12) downstream of the stator assembly (24) with respect to the longitudinal axis (L) of the engine (10);
wherein with respect to the longitudinal axis (L) of the engine (10), an interstage region (30) is defined between the rotor (20) and the stator assembly (24), a guide vane region (32) is defined in the longitudinal section in which the guide vanes (24a) extend to the inner wall (12a) of the housing (12) and an exhaust section (34) is defined between the stator assembly (24) and the exhaust opening (26),
wherein in at least one of the interstage region (30), the guide vane region (32) and the exhaust region (34), acoustic liners (30a - 34a) are provided to the housing (12).

2. Electrically driven ducted fan engine (10) according to claim 1,
wherein in all of the interstage region (30), the guide vane region (32) and the exhaust region (34), acoustic liners (30a - 34a) are provided to the housing (12).

3. Electrically driven ducted fan engine (10) according to claim 1 or claim 2, wherein the longitudinal section of the housing (12) upstream of the rotor (20) is devoid of acoustic liner.

4. Electrically driven ducted fan engine (10) according to any of the preceding claims,
wherein the acoustic liners (30a - 34a) are tuned to at least one wavelength, λ, which is preferably calculated depending on at least one of the number of rotor blades (20a), the number of guide vanes (24a) and a number of poles of the electric motor (22) driving the rotor (20).

5. Electrically driven ducted fan engine (10) according to any of the preceding claims,
wherein the acoustic liner (30a - 34a) comprises porous liner material.

6. Electrically driven ducted fan engine (10) according to claim 5 when depending on at least claim 4,
wherein the porous liner material is tuned with respect to its porosity, cavity thickness, flow resistivity and/or tortuosity.

7. Electrically driven ducted fan engine (10) according to claim 6,
wherein the porosity of the porous liner material is in the range of 80 to 99% and/or its cavity thickness is approximately λ/4.

8. Electrically driven ducted fan engine (10) according to any of the preceding claims,
wherein the acoustic liner (30a - 34a) comprises Helmholtz liners.

9. Electrically driven ducted fan engine (10) according to claim 8 when depending on at least claim 4,
wherein the Helmholtz liners are tuned with respect to their thickness, porosity, plate thickness, hole diameter and/or cavity depth.

10. Electrically driven ducted fan engine (10) according to claim 9,
wherein the hole diameter is in the range of 0,1 to 5 mm, the cavity thickness is in the range of λ/20 to λ/4 and/or the porosity is in the range of 2 to 10%.

11. Electrically driven ducted fan engine (10) according to any of the preceding claims,
wherein the engine (10) has a diameter of 28 to 38 cm.

12. Aircraft (100) with a fuselage (102) and at least one pair of wings (104), further provided with at least one electrically driven ducted fan engine (10) according to any of the preceding claims, wherein in particular the ducted fan engine (10) is pivotably mounted to one of the wings (104).
